(19) **Europäisches Patentamt**
**European Patent Office**
**Office européen des brevets**

(11) **EP 1 768 064 A1**

(12) **EUROPEAN PATENT APPLICATION**
published in accordance with Art. 158(3) EPC

(43) Date of publication:
**28.03.2007 Bulletin 2007/13**

(51) Int Cl.:
*G06T 7/00* (2006.01)

(21) Application number: **05760141.1**

(22) Date of filing: **13.07.2005**

(86) International application number:
**PCT/JP2005/012952**

(87) International publication number:
**WO 2006/009043 (26.01.2006 Gazette 2006/04)**

(84) Designated Contracting States:
**DE FR GB**

(30) Priority: **15.07.2004 JP 2004208603**

(71) Applicant: **NEC CORPORATION**
**Minato-ku,**
**Tokyo 108-8001 (JP)**

(72) Inventor: **MARUGAME, Atsushi,**
**c/o NEC Corporation**
**Tokyo 1088001 (JP)**

(74) Representative: **Wenzel, Heinz Peter**
**Patentanwälte Wenzel & Kalkoff**
**Postfach 73 04 66**
**D-22124 Hamburg (DE)**

(54) **DATA CHECKING METHOD, DATA CHECKING DEVICE, AND DATA CHECKING PROGRAM**

(57) The purpose is to execute the matching of data after state change from data before state change, or the matching of data before state change from data after state change. The component analyzing unit realized by software analyzes input data by using a configuration component of a selected state-specific database and sends the configuration component coefficient to the component coefficient conversion unit. The component coefficient conversion unit converts the sent configuration component coefficient into a configuration component coefficient corresponding to the state-specific database which is not selected and sends it to the state change data generation unit. The state change data generation unit generates the state change data by using the sent configuration component coefficient and the configuration component of the corresponding state-specific database. The matching unit matches the state change data and the registration data accumulated in the matching data accumulating unit.

Fig. 1

**Description**

**Technical Field**

The present invention relates to a data matching method and a data matching system (apparatus) which is applied to an object whose state changes and matches data of a state change object at a certain time with data at a different time of the object. Also, the present invention relates to a data matching program which is applied to an object whose state changes and matches data of a state change object at a certain time with data at a different time of the object. In particular, the present invention relates to a data matching method and a data matching system (apparatus) which match from an image and voice of biometrics information such as a face, a voiceprint or the like of a person at a certain time, an image and voice at a different time of the biometrics information, and relates to a data matching program which matches from an image and voice of biometrics information such as a face, a voiceprint or the like of a person at a certain time, an image and voice at a different time of the biometrics information.

**Background Art**

When matching is executed for data of an object whose state changes, there may be trouble at a matching of data of a certain time with data at a different time. For example, in the case of data with regard to the object whose state changes as represented by biometrics information, such as the face, voice and the like of a person, ageing causes loss of a feature of the youth, and a feature after ageing appears, or a change in emotion causes a feature of the face and voice to be unnoticeable, or another feature to be outstanding. Thus, the data in the state at a certain time is different from the data in the state at an other time even in the data of the same object, and may possibly result in trouble at the matching.

As an example of the method of generating the data after the shape is changed by adding a feature from the data at a certain time, a method of generating the face image after ageing from the face in the younger age when aging is added to the face image. For example, a computer graphics (CG) is used to draw the feature after ageing, such as wrinkle and the like, to the face in the younger age and to consequently generate the face image after ageing from the face in the younger age.

Also, in U.S. Patent No. 6556196, an image processing method is described, which in a case of processing a face image, refines the addition of an aging feature and an expression feature to an image by using a three-dimensional model, and can add even an unclear feature to the image. By this image processing method, a typical model of a deformable face is generated from a three-dimensional face data stored in a face database and an input face image is pasted on a generated model. Then, in order to give a feature change including the state change, a modeler is used to deform the model.

In Japanese Laid Open Patent Application (JP-P 2000-132675A), a face identifying and matching method is described, which is characterized by studying in advance the feature of an image variation caused by a difference in photographing conditions or photographing timing for each classified class, and selecting a class from a difference between two face images where at least one of the photographing condition and the photographing timing is different, and determining the feature amount where the feature amount of the image variation in the class selected from the two face images is reduced, respectively, and then executing the face identification and matching in accordance with the feature amounts of the two face images.

In Japanese Laid Open Patent Application (JP-P 2003-233671A), a method of estimating a development of at least one state in a body outer surface portion of a target person is described, by which a first data indicating at least one state is received, a second data to reflect how at least one state on the body outer surface is expected to be developed in association with a time elapse is received, and an estimation development of at least one state in accordance with the first data and the second data is generated and then the estimation development to the target person is sent.

**Disclosure of Invention**

In the case of matching the data by adding a feature to generate a state changed data, the procedure for generating the feature change caused by aging, the expression change or the like is not always established. When the generating procedure for the feature change is not established, a human must imitate an actually existing feature and write on the data. Thus, a manual process or a semi-automatic process which requires an effort close to manual work must be executed.

Also, in the case that the data is matched by using the state change data generated by adding a feature, differently from the drawing of the local relatively clear feature, the addition of the state change that is global and difficult to grasp intuitively by drawing on is difficult. Thus, a state change that is global and difficult to grasp intuitively is difficult to treat.

In the image processing method noted in U.S. Patent No. 6556196, a pre-prepared sample is used and the state feature is given to the image. Thus, even in the case of generating the face image of an arbitrary person, the feature of the same state change is generated on the same portion. For example, in the case of generating the face image of an arbitrary person, the same wrinkle is generated on the same portion.

Also, in the image processing method noted in U.S. Patent No.6556196, the usage where the state feature suitable for the matching face is added is not assumed. Thus, whether or not the generated sample has the state feature suitable for the face matching is uncertain. Hence, there is a possibility that a face image to which an unnatural state feature is added is generated.

Also, the image processing method described in U.S. Patent No.6556196 does not propose the purpose where a state change is added to an image by determining the change given to the image which is corresponding to the state. Thus, when a state change to be added to the image is determined, the work load on a user is heavy.

It is therefore a subject of the present invention to provide a data matching method, a data matching apparatus and a data matching program which, for generating state changed data, use for matching the state changed data where the peculiarity of an object is considered in accordance with the relative relation of the same object, and can consequently improve the matching performance of the data involving the state change.

Also, the present invention has the subject to provide a data matching method, a data matching apparatus and a data matching program which add a statistical state change to the data before the state change, and use for the matching of the state change data to which the feature of the global state change is added, and can consequently improve the matching performance of the data involving the state change.

Also, the present invention has the subject to provide a data matching method, a data matching apparatus and a data matching program which give a correspondence of a configuration component between respective categories and use for the matching of the state change data to which a typical state change for each age is added, and can consequently improve the matching performance of the data at a particular state.

Moreover, the present invention has the subject to provide a data matching method, a data matching apparatus and a data matching program which can add a statistical state change to the data prior to the state change and automatically generate the state change data to be generated at the time of the matching and can suppress the load on a worker at the time of the data matching.

A data matching method according to the present invention includes: a configuration component accumulation step accumulating a configuration component generated by decomposing a measuring quantity of an object by a predetermined method and a plurality of states of the object each of which is corresponding to the configuration component; a component decomposition step decomposing a measuring quantity of a matching target object into the configuration component at a predetermined state of the plurality of states; a parameter conversion step converting a parameter corresponding to the configuration component of a predetermined state into a converted parameter of a second state of the plurality of states different from the predetermined state; a state change data generating step generating state change data by adding a predetermined state change to data of the matching target object by using a configuration component accumulated in the configuration component accumulation step and the converted parameter; and a matching step matching the state change data and matching data accumulated in advance. Under such a configuration, the data generated by adding the state information to input data is used for executing the matching. As a result, the matching performance of the data involving the state change is improved.

In the data matching method according to the present invention, the predetermined method is the principal component analysis.

A data matching method according to the present invention includes: a configuration component accumulation step accumulating a configuration component generated by decomposing a measuring quantity of an object by a predetermined method and a plurality of states of the object each of which is corresponding to the configuration component; a connecting step connecting a parameter corresponding to the configuration component at a first state of the plurality of states and a parameter corresponding to the configuration component at a second state through a conversion using a learning; a state change data generation step generating state change data of the second state by converting data of the matching target object at a first state through a conversion using the learning; and a matching step matching the state change data and matching data accumulated in advance. According to such configuration, the matching performance of the data involving the state change is improved. Moreover, the configuration of the data matching apparatus is simplified. The "learning" implies the generation of a face image, for example, in accordance with the conversion using a neural network, by defining state-specific data of the same person as learning data.

In the data matching method according to the present invention, the data of the matching target is biometrics data of a human being. The biometrics data means, for example, an image of a portion of a human body exemplified as the face and the fingerprint, the one-dimensional data of the voice such as sound and the like, and the three-dimensional data of the face shape.

In the data matching method according to the present invention, each of a plurality of states corresponds to a state at a different time through the course of aging.

In the data matching method according to the present invention, the measuring quantity is an image of a face.

The data matching apparatus according to the present invention is a computer having a function of executing each of the steps included in the data matching method according to the present invention. The data matching program according to the present invention instructs the computer to execute the data matching method according to the present invention.

The data matching method according to the present invention is a data matching method for matching the data of the object of the matching target with the data included in a data group and corresponding to the object of the matching target and is characterized by including: a matching data accumulating step of accumulating in advance the data group registered for the matching; a component decomposing step of decomposing the data of the matching target into a configuration component in a predetermined state; a parameter converting step of converting the parameter corresponding to the configuration component in the predetermined state into a parameter (attained by coefficients $c_i$, $d_i$ of the configuration component) in a state different from the predetermined state; a state change data generating step of accumulating the configuration component of the data classified into each state, and using the accumulated configuration component and the parameter converted at the parameter converting step, and then generating the state change data where a predetermined state change is given to the data of the matching target; and a matching step of matching the state change data generated at the state change data generating step with a matching data group accumulated at the matching data accumulating step.

Also, the data matching method is a data matching method, which matches the data of the object of the matching target with the data included in the data group and corresponding to the object of the matching target and may include: a matching data accumulating step of accumulating in advance the data group registered for the matching; a state change data generating step of generating the state change data where the data in the predetermined state is changed into the data in the different state from the predetermined state, in accordance with the conversion formed through the learning through the data classified into each state; and a matching step of matching the state change data generated at the state change data generating step with the matching data group accumulated at the matching data accumulating step.

Also, the data matching method is a data matching method, which matches the biometrics data of a person with the biometrics data included in the data group and corresponding to a person and may include: the matching data accumulating step of accumulating in advance the data group registered for the matching; a component decomposing step of decomposing the biometrics data of the matching target into the configuration component in the predetermined state; a parameter converting step of converting the parameter corresponding to the configuration component in the predetermined state into the parameter in a state different from the predetermined state; a state change data generating step of accumulating the configuration component of the biometrics data classified into each state, and using the accumulated configuration component and the parameter converted at the parameter converting step, and then generating the state change data where the predetermined state change is given to the biometrics data of the matching target; and a matching step of matching the state change data generated at the state change data generating step with the matching data group accumulated at the matching data accumulating step.

Also, the data matching method is a data matching method, which matches the biometrics data of a person with the biometrics data included in the data group and corresponding to the person and may include: a matching data accumulating step of accumulating in advance the data group registered for the matching; a state change data generating step of generating the state change data where the biometrics data in the predetermined state is changed into the biometrics data in a state different from the predetermined state, in accordance with the conversion formed through the learning through the biometrics data classified into each state; and a matching step of matching the state change data generated at the state change data generating step with the matching data group accumulated at the matching data accumulating step.

Also, in the data matching method, a component decomposing step decomposes the biometrics data into the configuration component after the predetermined ageing, and a parameter converting step converts the parameter corresponding to the configuration component after the predetermined ageing into the parameter after the ageing different from the predetermined ageing, and a state change data generating step accumulates the configuration component of the biometrics data classified into each ageing, and uses the accumulated configuration component and the parameter converted at the parameter converting step, and then generates the aging data (attained by the state change data) where the predetermined aging is given to the biometrics data, and the matching step matches the aging data generated at the state change generating step with the matching data group accumulated at the matching data accumulating step.

Also, in the data matching method, a state change data generating step generates the aging data where the biometrics data after the predetermined ageing is changed into the biometrics data after the ageing different from the predetermined ageing, in accordance with the conversion formed through the learning through the biometrics data classified into each ageing, and a matching step matches the aging data generated at the state change generating step with the matching data group accumulated in the matching data accumulating step.

Also, the data matching method is a data matching method of matching a face image of a person of a matching target with a face image included in a face image group and corresponding to a person and may include: a matching data accumulating step of accumulating in advance the face image group registered for the matching; a component decomposing step of decomposing the face image into a configuration component in a predetermined expression; a parameter converting step of converting a parameter corresponding to the configuration component in the predetermined expression into a parameter in an expression different from the predetermined expression; an expression change data generating step of accumulating the configuration component of the face image classified into each expression, and using the accumulated configuration component and the parameter converted at the parameter converting step and then generating an expression change data (attained by the state change data) where a predetermined expression change is given to the face image; and a matching step of matching the expression change data generated at the expression change data generating step with the matching data group accumulated at the configuration component accumulating step.

Also, the data matching method is a data matching method of matching the face image of a person of the matching target with the face image corresponding to the person included in the face image group and may include the matching data accumulating step of accumulating in advance the face image group registered for the matching; an expression change data generating step of generating the expression change data where the face image in the predetermined expression is changed into the face image in an expression different from the predetermined expression, in accordance with the conversion using the study through the face image classified into each expression; and a matching step of matching the expression change data generated at the expression change data generating step with the matching data group accumulated at the matching data accumulating step.

The data matching apparatus according to the present invention is a data matching apparatus which matches the data of the object of the matching target with the data corresponding to the object of the matching target included in the data group and is characterized by including: a component decomposing unit (attained by a component analyzing unit 101) for decomposing the data of the matching target into the configuration component in the predetermined state; a parameter converting unit (attained by a component coefficient converting unit 103) for converting the parameter corresponding to the configuration component in the predetermined state into the parameter in a different state from the predetermined state; a state change data generating unit (attained by a state change data generating unit 102) for accumulating the configuration component of the data classified into each state, and using the accumulated configuration component and the parameter converted by the parameter converting unit and then generating the state change data where a predetermined state change is given to the data of the matching target; a matching data accumulating unit (attained by a matching data accumulating unit 104) for accumulating in advance the data group registered for the matching; and a matching unit (attained by a matching unit 105) for matching the state change data generated by the state change data generating unit with the matching data group accumulated by the matching data accumulating unit.

Also, the data matching apparatus is a data matching apparatus, which matches the data of the object of the matching target with the data included in a data group and corresponding to the object of the matching target and may include: a state change data generating unit (attained by a state change data generating unit 102b) for generating the state change data where the data in the predetermined state is changed into the data in a state different from the predetermined state, in accordance with the conversion using the study through the data classified into each state; the matching data accumulating unit for accumulating in advance the data group registered for the matching; and the matching unit for matching the state change data generated by the state change data generating unit with the matching data group accumulated by the matching data accumulating unit. According to such configuration, it is possible to improve the matching performance of the data involving the state change and also possible to simplify the configuration of the data matching apparatus.

Also, the data matching apparatus is a data matching apparatus, which matches the biometrics data of the person with the biometrics data corresponding to the person included in the data group and may include: a component decomposing unit for decomposing the biometrics data of the matching target into the configuration component in the predetermined state ; a parameter converting unit for converting the parameter corresponding to the configuration component in the predetermined state into the parameter in a state different from the predetermined state; a state change data generating unit for accumulating the configuration component of the biometrics data classified into each state, and using the accumulated configuration component and the parameter converted by the parameter converting unit, and then generating the state change data where the predetermined state change is given to the biometrics data of the matching target; a matching data accumulating unit for accumulating in advance the data group registered for the matching; and a matching unit for matching the state change data generated by the state change data generating unit with the matching data group accumulated by the matching data accumulating unit.

Also, the data matching apparatus is a data matching apparatus, which matches the biometrics data of a person with the biometrics data included in the data group and corresponding to a person and may include: a state change data generating unit for generating the state change data where the biometrics data in the predetermined state is changed into the biometrics data in a different state from the predetermined state, in accordance with the conversion using the study through the biometrics data classified into each state; a matching data accumulating unit for accumulating in advance the data group registered for the matching; and a matching unit for matching the state change data generated by the state change data generating unit with the matching data group accumulated by the matching data accumulating unit.

Also, the component decomposing unit decomposes the biometrics data into the configuration component after the predetermined ageing, the parameter converting unit converts the parameter corresponding to the configuration component after the predetermined ageing into the parameter after the ageing different from the predetermined ageing, the state change data generating unit accumulates the configuration component of the biometrics data classified into each ageing, and uses the accumulated configuration component and the parameter converted by the parameter converting unit, and then generates the aging data where the predetermined aging is given to the biometrics data, and the matching unit matches the aging data generated by the state change generating unit with the matching data group accumulated by the matching data accumulating unit.

Also, the state change data generating unit may generate the aging data where the biometrics data after the predetermined ageing is changed into the biometrics data after ageing different from the predetermined ageing, in accordance with the conversion formed through learning through the biometrics data classified into each ageing, and the matching unit may match the aging data generated by the state change generating unit with the matching data group accumulated by the matching data accumulating unit.

Also, the data matching apparatus is a data matching apparatus for matching the face image of a person of the matching target with the face image included in the face image group and corresponding to a person and may include: a component decomposing unit for decomposing the face image into the configuration component in the predetermined expression; a parameter converting unit for converting the parameter corresponding to the configuration component in the predetermined expression into the parameter in an expression different from the predetermined expression; an expression change data generating unit (attained by the state change data generating unit 102) for accumulating the configuration component of the face image classified into each expression, and using the accumulated configuration component and the parameter converted by the parameter converting unit and then generating the expression change data where the predetermined expression change is given to the face image; a matching data accumulating unit for accumulating in advance the face image group registered for the matching; and a matching unit for matching the expression change data generated by the expression change data generating unit with the matching data group accumulated by the configuration component accumulating unit.

Also, the data matching apparatus is a data matching apparatus, which matches the face image of a person of the matching target with the face image included in the face image group and corresponding to the person and may include: an expression change data generating unit (attained by the state change data generating unit 102b) for generating the expression change data where the face image in the predetermined expression is changed into the face image in an expression different from the predetermined expression, in accordance with the conversion using the study through the face image classified into each expression ; a matching data accumulating unit for accumulating in advance the face image group registered for the matching; and a matching unit for matching the expression change data generated by the expression change data generating unit with the matching data group accumulated by the matching data accumulating unit.

The data matching program according to the present invention is a data matching program which matches the data of the object of the matching target with the data included in a data group and corresponding to the object of the matching target and is characterized by instructing a computer having a matching data accumulating unit for accumulating in advance the data group registered for the matching to execute: a process for decomposing the data of the matching target into the configuration component in the predetermined state; a process for converting the parameter corresponding to the configuration component in the predetermined state into the parameter in a state different from the predetermined state; a process for accumulating the configuration component of the data classified into each state, and using the accumulated configuration component and the converted parameter and then generating the state change data where the predetermined state change is given to the data of the matching target; and a process for matching the generated state change data with the matching data group accumulated by the matching data accumulating unit.

Also, the data matching program is a data matching program which matches the data of the object of the matching target with the data included in a data group and corresponding to the object of the matching target and instructs the computer having a matching data accumulating unit for accumulating in advance the data group registered for the matching to execute: a process for generating the state change data where the data in the predetermined state into the data in a state different from the predetermined state, in accordance with the conversion formed through learning by using the data classified into each state; and a process for matching the generated state change data with the matching data group accumulated by the matching data accumulating unit. According to such configuration, it is possible to improve the matching performance of the data involving the state change and also possible to simplify the configuration of the data matching apparatus.

According to the present invention, the state change data is generated to then execute the matching. Thus, for the state change object, only the data of the object at a certain time can be used to execute the matching of high precision.

Thus, when the state change data is generated, in accordance with the relative relation of the same object, the state change data where the peculiarity of the object is considered is used for the matching. Hence, it is possible to improve the matching performance of the data involving the state change.

According to the present invention, even if there is only biometrics data such as the image, the voice and the like at a certain time, by generating the data at the time of the state change and then matching with the registration information, it is possible to improve the performance of the matching of person identification, crime investigation, academic investigation or the like in a security system.

**Brief Description of Drawings**

Fig. 1 is a block diagram showing an example of the configuration of a data matching apparatus according to the present invention;

Fig. 2 is a flowchart showing an example of the data matching process where the data matching apparatus matches a face image;

Fig. 3 is a block diagram showing another example of the configuration of the data matching apparatus;

Fig. 4 is a flowchart showing another example of the data matching process where the data matching apparatus matches the face image;

Fig. 5 is a block diagram showing an example of the configuration of the component analyzing apparatus;

Fig. 6 is a block diagram showing an example of the configuration of the state change generating apparatus;

Fig. 7 is a block diagram showing an example of the configuration of the component coefficient converting apparatus; and

Fig. 8 is a block diagram showing an example of the configuration of the state change data generating apparatus.

**Best Mode for Carrying Out the Invention**

FIRST EMBODIMENT.

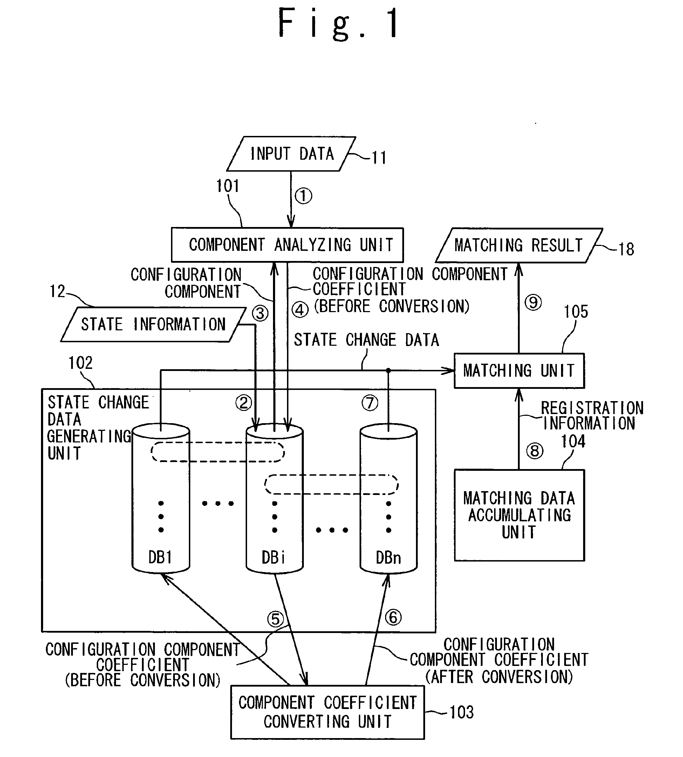

The first embodiment of the present invention will be described below with reference to the drawings. Fig. 1 is a block diagram showing an example of the configuration of a data matching apparatus according to the present invention. Here, the case where the shape is changed through aging, a face image is used as state change data, and the data matching apparatus is used for matching a face image at a certain time with a face image at a different time is explained.

The state change is not limited to aging. Then, the data matching apparatus may be an apparatus for matching the data involving a different state change such as the expression change of a face and the like. Also, the state change data is not limited to the face image, and may be data such as an image of the various portions of the human body, a fingerprint and the like, one-dimensional data such as the voice, sound and the like, and three-dimensional biometrics data of a face shape and the like. Also, the state change data may be data of an animal other than a human and a plant and the data with regard to the object that is aged while having an individual property similarly to a living thing.

As shown in Fig. 1, the data matching apparatus includes: a component analyzing unit 101 for analyzing the component of input data 11; a state change data generating unit 102 for generating a state (ageing) change data of the input data 11; a component coefficient converting unit 103 for correlating between the databases of respective states (ageing); a matching data accumulating unit 104 for accumulating in advance the matching data; and a matching unit 105 for matching the state (ageing) change data with the data accumulated by the matching data accumulating unit 104.

Also, the state change data generating unit 102 has a plurality of state-specific (ageing-specific) databases DB1, ..., DBi, ..., DBn, which accumulate the configuration components of the data classified into respective states (ageing). Each of the databases accumulates the configuration component obtained by decomposing the measuring quantity of an object by using a predetermined method such as principal component analysis and the like. Hereafter, for comprehensively representing the state-specific databases DB1 to DBn, or for representing any of the state-specific databases, we refer to these merely as the state-specific database.

In this embodiment, the matching data accumulating unit 104 is realized by, for example, a magnetic disc device. The component analyzing unit 101, the component coefficient converting unit 103 and the matching unit 105 are realized by, for example, a central processor in a computer and a program executed by the central processor. The state change data generating unit 102 is realized by, for example, a magnetic disc device, a central processor in the computer and a program executed by the central processor.

The component analyzing unit 101 has a function for re-configuring the face image so that the deviation is the smallest, by using the configuration component in the state-specific database Bi corresponding to state (ageing) information 12 of the face image which is the input data 11. In this embodiment, the component analyzing unit 101 selects the state-specific database Bi corresponding to the state of the face image of the input data 11, for example, in accordance with the state information 12 inputted by the state change data generating unit 102, and re-configures the face image.

For example, when the component analysis is executed, a linear component analysis such as principal component analysis and the like is used in many cases. When the face image is configured in linear coupling of principal components, the face image is represented by the equation (1).

$$\text{Equation (1):}$$

$$Ip = c1P1 + c2P2 + \ldots + cmPm$$

(Pi: Principal component, ci: Coefficient)

In this embodiment, as the component analyzing unit 101, a minimum deviation coefficient set ci where the deviation from an input face image I0 is the smallest is selected from the face images represented by the equation (1). The component analyzing unit 101 sends the selected minimum deviation coefficient selection set ci through the state-specific databases DBi of the state change data generating unit 102 to the component coefficient converting unit 103.

The state change data generating unit 102 has a plurality of state-specific databases DB1, ..., DBi, ..., DBn that accumulate the configuration components of the data classified into the respective states (ageing). Also, the state change data generating unit 102 has a function for passing a coefficient set ci corresponding to each state-specific database calculated by the component analyzing unit 101 to the component coefficient converting unit 103.

Also, the state change data generating unit 102 has a function for re-configuring the face image by using: a coefficient set di converted by the component coefficient converting unit 103 for the state-specific database which is different from the state-specific databases selected by the component analyzing unit 101; and the configuration component inside the different state-specific database. Also, the state change data generating unit 102 has a function for sending a re-configuration face image Jp as a state (ageing) change data to the matching unit 105. The re-configuration face image Jp is represented by using an equation (2) as the linear coupling of the coefficient set di in a principal component Qi inside the state-specific database, when the principal component analysis is used.

$$\text{Equation (2):}$$

$$Jp = d1Q1 + d2Q2 + \ldots + dmQm$$

The state-specific database Bi accumulates the components, which are generated by converting into major elements {U1, U2, ..., Uj, ..., Up} among the elements constituting each image, from face images {A1, A2, ..., Ai, ..., Ap} in a certain age, through a predetermined,calculation, as the configuration components. For example, in the case of using the principal component analysis, the state-specific database accumulates the value, which is obtained by singular value decomposition of the matrix where a pixel Ai (x, y) of each image is arranged as a column vector, as the configuration component. In this case, the matrix where the pixel Ai (x, y) of each image is arranged as the column vector is represented by an equation (3).

[Numeral 1]

$$A = \begin{bmatrix} A1(0,0) & \cdots & Ai(0,0) & \cdots & Ap(0,0) \\ \vdots & \cdots & \vdots & \cdots & \vdots \\ A1(x,y) & \cdots & Ai(x,y) & \cdots & Ap(x,y) \\ \vdots & \cdots & \vdots & \cdots & \vdots \\ A1(m,n) & \cdots & Ai(m,n) & \cdots & Ap(m,n) \end{bmatrix}$$ EQUATION (3)

The state-specific database accumulates, as configuration components, the former p column vectors {U1, U2, ..., Uj, ..., Up} of an orthogonal matrix obtained by applying the singular value decomposition represented by equation (4) to the matrix represented by equation (3)

Equation (4):

$$A = USV^t$$

By the way, in equation (4), S is the matrix where the elements except diagonal components are 0, and the diagonal components are arranged in a descending order of an absolute value.

Also, in order to correlate the respective state-specific databases, between the two state-specific databases, the face images of the same persons are generated in advance correspondingly to the number of the components to be used, respectively. For example, when 30 configuration components are used, in the two state-specific databases, the face images in both of the states (ageing) are generated correspondingly for 30 or more persons, and the configuration components of the respective state-specific databases are generated and accumulated in advance.

The component coefficient converting unit 103 has a function for converting a coefficient that is multiplied to the configuration component of the state-specific database. For example, the case of using the principal component analysis is exemplified.

For example, the two state-specific databases DBi, DBj are used, and the principal components of the databases DBi, DBj are assumed to be $Pi$ ($i=1, ..., n$) and $Qj$ ($j=1, ..., n$), respectively, and the coefficients of the principal components are assumed to be $ci$ ($i=1, ..., n$) and $dj$ ($j=1, ..., n$), respectively. In this case, in order to convert from the coefficient $ci$ to the coefficient $dj$, a plurality of face images Ip, Jp belonging to both of the states (ageing) respectively corresponding to the databases DBi, DBj under the faces of the same persons are used. Here, the face images Ip, Jp are represented by equations (5) and (6) respectively, by using equation (1).

Equation (5):

$$Ip = c1P1 + c2P2 + \ldots + cnPn$$

## Equation (6):

$$Jp = d1Q1 + d2Q2 + \ldots + dnQn$$

Thus, supposing that the conversion from the coefficients $c_i$ to the coefficients $d_j$ is a linear conversion T, and supposing a coefficient set of a person A is represented by {CiA, DjA}, a coefficient set of a person B is represented by {CiB, DjB} and so on. Then, the coefficient set of the person B {CiB, DjB} etc. is represented by an equation (7).

## Equation (7):

$$[DjA, DjB, \ldots] = T[CiA, CiB, \ldots]$$

Here, in equation (7), CiA and DjA are the column vectors where the coefficients $c_i$, $d_i$ in the equation (4) and equation (5) are vertically arranged. Thus, the linear conversion T can be calculated by using an equation (8), when C = [CiA, CiB, ...] and D=[DjA, DjB, ...] are assumed.

## Equation (8):

$$T = DC^t (CC^t)^{-1}$$

The component coefficient converting unit 103 may execute the conversion from $c_i$ to $d_j$ by using a nonlinear conversion. For example, the component coefficient converting unit 103 may define the coefficient set {$c_i$, $d_j$}, in which they correspond to the databases DBi, DBj in the faces of the same persons, respectively, as the learning data, and execute the coefficient conversion by using the neural network.

The matching data accumulating unit 104 is a database for accumulating the data for the matching and accumulates in advance the data registered for the matching. The matching data accumulating unit 104 is realized by, for example, a data storage unit of the usual matching apparatus. The matching data accumulating unit 104 accumulates in advance the data groups for a current face image of a person and a face image having no expression, for example, as the data for the matching.

The matching unit 105 having a function for comparing and matching the state change data generated by the state change data generating unit 102 with the registration data accumulated by the matching data accumulating unit 104 and outputting a matching result 18. For example, the matching unit 105 determines the difference between the state (ageing) change data and the registration data and judges the data, in which the determined difference is the smallest, as the data of the person itself. The method is not limited to those using the difference. The matching unit 105 can execute the matching by using the other matching method.

Also, the matching unit 105 matches the plurality of state change data generated by the state change data generating unit 102 with the registration data, as shown in Fig. 1. Thus, the matching unit 105 matches the plurality of state change data with the registration data, and then regards the data, which have the minimum difference among the entire differences, as the data of the person itself, and can consequently execute the matching corresponding to the state (ageing) change. When the state (ageing) of the data accumulated by the matching database (the matching data accumulating unit 104) is known, the matching unit 105 may match the state change data of only the state (age) corresponding to the registration data with the registration data. If so, the matching time can be reduced.

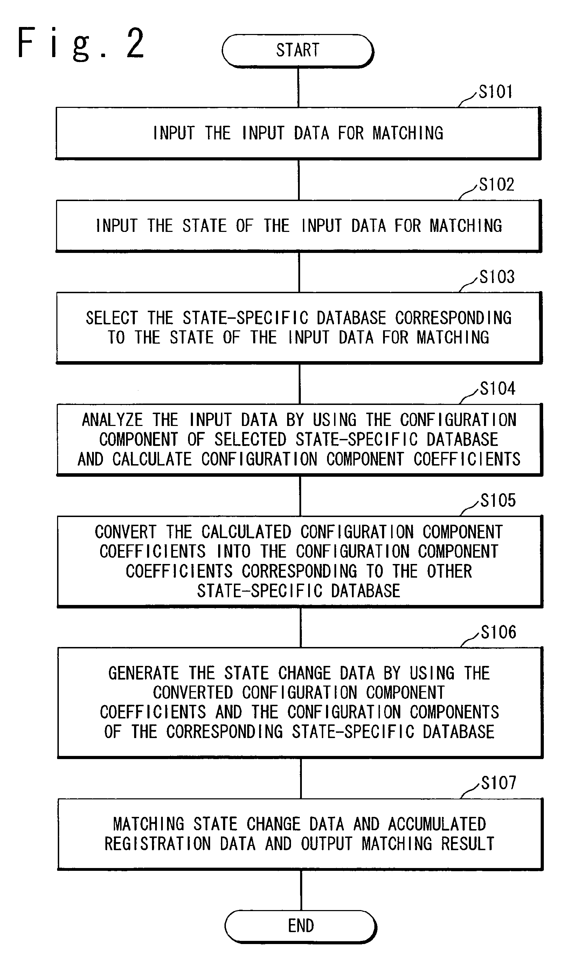

The operations will be described below. Fig. 2 is a flowchart showing an example of the data matching process where the data matching apparatus matches the face image. The component analyzing unit 101 inputs the input data 11 of a matching target, in accordance with an input operation by a user (Step S101). In this example, the component analyzing unit 101 inputs the face image of the matching target as input data 11.

Also, the state change data generating unit 102 inputs the state information 12 indicating the state of the input data 11, in accordance with the input operation of the user (StepS102). For example, the state change data generating unit 102 inputs the year and year zone (age) of the person of the face image in the input data 11. Also, for example, the state change data generating unit 102 inputs the information indicating the expression of the face image in the input data 11, such as the feeling and the like, as state information 12.

The component analyzing unit 101 selects the state-specific database Bi corresponding to the state of the input data 11 of the matching target, in accordance with the state information 12, from the state-specific databases DB of the state change data generating unit 102 (Step S103). Also, the component analyzing unit 101 extracts the configuration component from the selected state-specific database, analyzes the input data 11 and calculates a configuration component coefficient (Step S104). Also, the component analyzing unit 101 sends the calculated configuration component coefficient through the state-specific database in the state change data generating unit 102 to the component coefficient converting unit 103.

The component coefficient converting unit 103 converts the configuration component coefficient calculated by the component analyzing unit 101, into the configuration component coefficient corresponding to the state-specific database other than the state-specific database selected by the component analyzing unit 101 (Step S105) . The state change data generating unit 102 extracts the configuration component from the state-specific database corresponding to the configuration component coefficient after the conversion and generates the state change data in accordance with the configuration component coefficient converted by the component coefficient converting unit 103 and the extracted configuration component (Step S106).

Matching unit 105 extracts the registration data from the matching data accumulating unit 104. Then, matching unit 105 matches the state change data generated by state change data generating unit 102 with the registration data accumulated by matching data accumulating unit 104, and outputs the matching result 18 (Step S108).

As mentioned above, according to this embodiment, since the data before the state change and after the state change is generated to execute the matching for the state change object, only the data of the object at a certain time can be used to then execute the matching of high precision. Thus, at the time of generation of the state change data, by using for the matching the state change data where the peculiarity of the object is considered on the basis of the relative relations of the same object, it is possible to improve the matching performance of the data involving the state change.

Also, in this embodiment, the feature of the object is decomposed into the configuration components. Thus, by using even the statistical state feature that is difficult to manually represent, it is possible to execute the matching of high precision. Hence, by using for the matching the state change data where the statistical state change is added to the data before the state change and the feature of the rough state change is also added, it is possible to improve the matching performance of the data involving the state change.

Also, according to this embodiment, it can be processed independently of the time axis. Thus, when the process for giving aging as the state change is executed, matching of high precision can be performed on another aging of not only the ageing change but also the aging towards the young direction and the like.

Also, according to this embodiment, since state change data in a plurality of states can be generated and used for the matching, by coping with the plurality of state changes, it is possible to execute the matching of high precision. Also, according to this embodiment, by giving correspondence of the configuration component between the respective state categories and using for

matching the state change data in which the typical state change in each age is added to the data before the state change, it is possible to improve the matching performance of the data in the particular state.

Also, according to this embodiment, since addition of the state change to be generated at the time of matching can be automatically executed, the burden on the worker at the time of matching can be reduced. Thus, it is possible to add the statistical state change to the data before the state change, and automatically generate the state change data to be generated at the time of the matching and consequently reduce the burden on the worker at the time of the data matching.

Moreover, according to this embodiment, the many existing matching systems can be used to realize the data matching apparatus. Thus, it is possible to easily assemble the system (data matching apparatus) and possible to change the system.

SECOND EMBODIMENT.

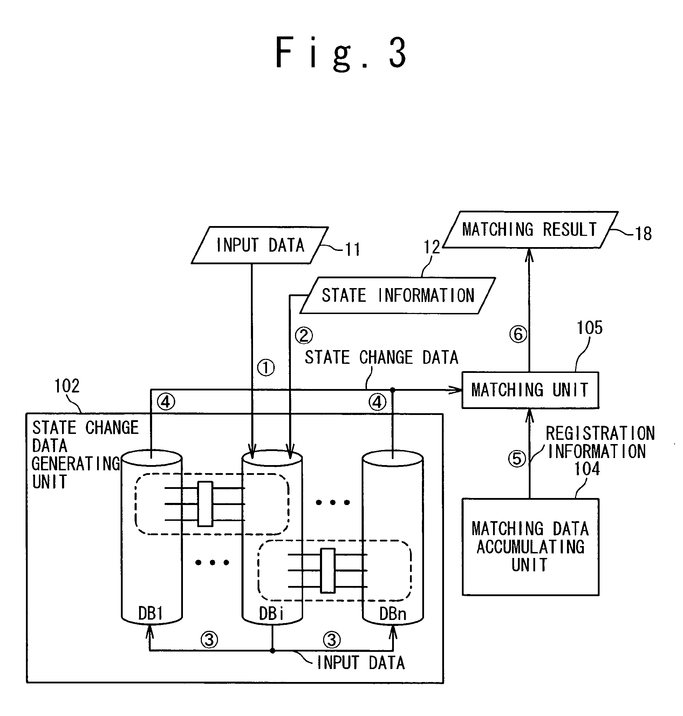

The second embodiment of the present invention will be described below with reference to the drawings. Fig. 3 is a block diagram showing another example of the configuration of the data matching apparatus. This embodiment differs from the first embodiment in that the data matching apparatus does not include component analyzing unit 101 and component coefficient converting unit 103 in the configuration elements shown in Fig. 1. Also, in this embodiment, the process of the state change data generating unit 102b in the data matching apparatus differs from the process of the state change data generating unit 102 shown in the first embodiment.

In this embodiment, the state change data generating unit 102b inputs a face image, which is the input data 11, to the state-specific database corresponding to the state (ageing) information 12 of the input data 11. The state change data generating unit 102b directly sends input data 11 to the other state-specific databases except the state-specific database corresponding to the input data 11 and generates the face images (state change data) of the states (ageing) other than the state of
input data 11. Then, state change data generating unit 102b sends the generated face image to matching unit 105.

In this embodiment, state change data generating unit 102b generates the state change data by directly converting the face image from a certain state into the other state without using the configuration component. For this reason, between the respective state-specific databases, the data classified into each state (ageing) of the same person is accumulated in advance to generate a neural network. Then, state change data generating unit 102b uses the pre-generated neural network and generates the converted face image. In this embodiment, for example, the state change data generating unit 102b defines the pre-accumulated state-specific database of the same person as learning data, and uses the neural network and then executes the converting process and consequently generates the face image.

In this embodiment, a large quantity of state-specific data of the same person is required, because of the learning in the neural network, as compared with the first embodiment. However, the configuration of the data matching apparatus can be simplified.

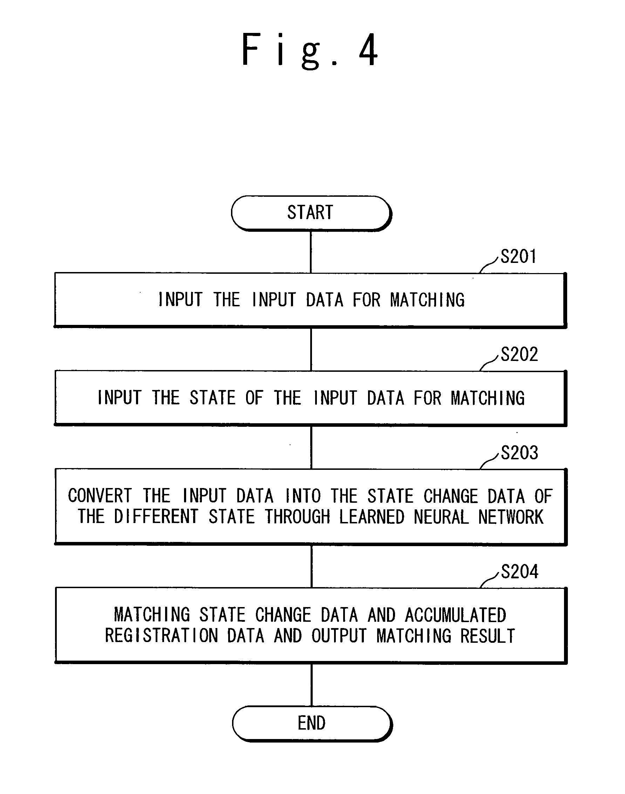

The operations will be described below. Fig. 4 is a flowchart showing another example of the data matching process where the data matching apparatus executes the matching of face images. The state change data generating unit 102b inputs input data 11 of the matching target, in accordance with the input operation by the user (Step S201). In this embodiment, the state change data generating unit 102b inputs the face image of the matching target as input data 11.

Also, state change data generating unit 102b inputs state information 12 indicating the state of input data 11, in accordance with the input operation of the user (Step S202). For example, state change data generating unit 102b inputs year and year zone (age) of the person of the face image of input data 11. Also, for example, the state change data generating unit 102b inputs information indicating the expression of the face image of input data 11, such as feeling and the like, as state information 12.

The state change data generating unit 102b converts input data 11 into the state change data of a state (age) other than the state of input data 11 (Step S203). In this case, state change data generating unit 102b generates the state change data by using the already-learned neural network, in accordance with state information 12.

The matching unit 105 extracts the registration data from matching data accumulating unit 104. Then, the matching unit 105 matches the state change data generated by the state change data generating unit 102b with the registration data accumulated by the matching data accumulating unit 104, and outputs the matching result 18 (Step S204).

As mentioned above, according to this embodiment, the data matching apparatus, even if component analyzing unit 101 and component coefficient converting unit 103 shown in the first embodiment do not exist, can obtain an effect similar to the data matching apparatus indicated in the first embodiment. Thus, it is possible to improve the matching performance of the data involving the state change and also possible to simplify the configuration of the data matching apparatus.

THIRD EMBODIMENT.

The third embodiment of the present invention will be described below with reference to the drawings. This embodiment corresponds to an apparatus where the data matching apparatus in the first embodiment is made into a specific apparatus. In this embodiment, the data matching apparatus includes: a component coefficient converter where component coefficient converting unit 103 is made into an apparatus; a state change generator where the state change data generating unit 102 is made into an apparatus; a component analyzer where component analyzing unit 101 is made into an apparatus; a matching data accumulator where matching data accumulating unit 104 is made into an apparatus; and a matching device where matching unit 105 is made into an apparatus.

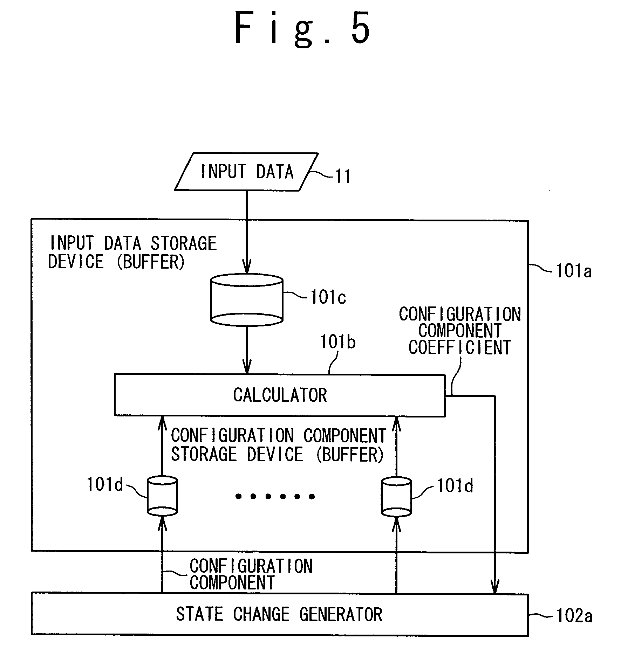

Fig. 5 is a block diagram showing an example of the configuration of component analyzer 101a where component analyzing unit 101 is made into an apparatus. As shown in Fig. 5, component analyzer 101a includes a calculator 101b, an input data storage device 101c and a configuration component storage device 101d.

The input data storage device 101c is specifically realized by a memory and a magnetic disc device. The input data storage device 101c has a function for accumulating the face image of the input data 11. The configuration component storage device 101d is specifically realized by a memory and a magnetic disc device. The configuration component storage device 101d has a function for accumulating the configuration component sent from the state change generator 102a where the state change data generating unit 102 is made into an apparatus.

The calculator 101b is realized by a CPU that is operated in accordance with a program. The calculator 101b carries out the data processing that uses input data 11 and configuration component. The calculator 101b executes a calculating process similar to the component analyzing unit 101 shown in the first embodiment, in accordance with the face image accumulated by the input data storage device 101c and the configuration component accumulated by the configuration component storage device 101d, and determines the configuration component coefficient. Then, calculator 101b sends the determined configuration component coefficient to the state change generator 102a.

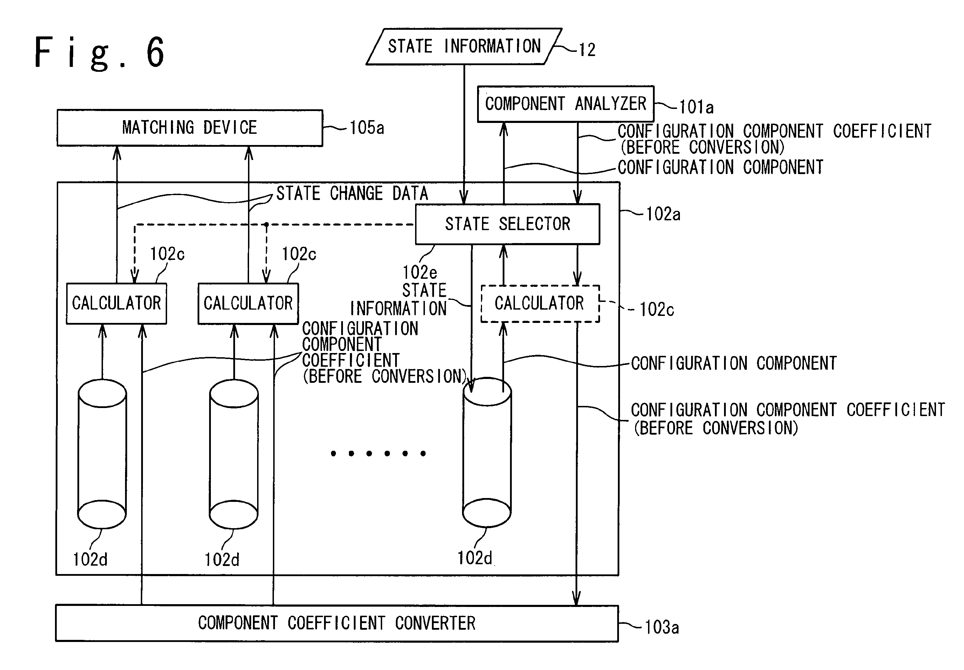

Fig. 6 is a block diagram showing an example of the configuration of state change generator 102a where the state change data generating unit 102 is made into an apparatus. As shown in Fig. 6, state change generator 102a includes a calculator 102c, a state-specific configuration component storage device 102d and a state selector 102e.

The state selector 102e is specifically realized by a semiconductor circuit for switching or the like. The state selector 102e has a function for selecting a state-specific database to extract the configuration component to be sent to component analyzer 101a, in accordance with state information 12. The state-specific configuration component storage device 102d is specifically realized by a memory or a magnetic disc device. The state-specific configuration component storage device 102d has a function for accumulating the configuration component of a face image for each state. The calculator 102c is realized by a CPU that is operated in accordance with a program. The calculator 102c has a function for generating the state change data in accordance with the configuration component coefficients and the configuration components of the face image for each state.

In this embodiment, the state selector 102e selects the state-specific database corresponding to the state information 12 and extracts the configuration component from the selected database and then sends it to component analyzer 101a. Also, the state selector 102e sends the configuration component coefficients calculated by component analyzer 101a to a component coefficient converter 103a where the component coefficient converting unit 103 is made into an apparatus. The calculator 102c executes the calculation by using equation (2), in accordance with the configuration component coefficient converted by the component coefficient converter 103a and the configuration component of the state-specific database corresponding to the configuration component coefficient after the conversion, and generates the state change data.

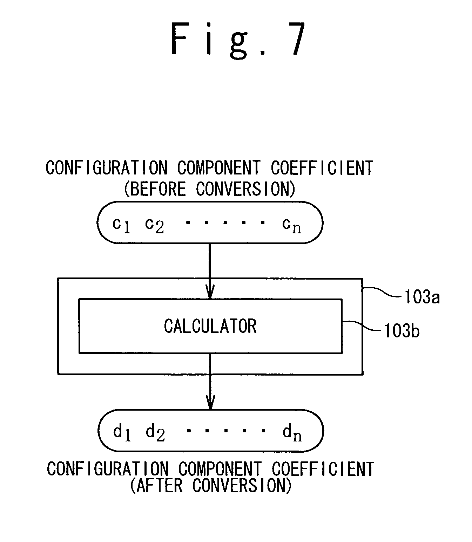

Fig. 7 is a block diagram showing an example of the configuration of component coefficient converter 103a where component coefficient converting unit 103 is made into an apparatus. As shown in Fig. 7, component coefficient converter 103a includes a calculator 103b. The calculator 103b is specifically realized by a CPU operated in accordance with a program. The calculator 103b has a function for converting the configuration component coefficient from the state change generator 102a, into the configuration component coefficient corresponding to the state-specific database different from the state-specific database corresponding to the configuration component coefficient. The calculator 103b converts the configuration component coefficient by using a converting method similar to the component coefficient converting unit 103 shown in the first embodiment.

The matching data accumulator where matching data accumulating unit 104 is made into an apparatus is specifically realized by a storage device, such as a memory, a magnetic disc device and the like.

A matching device 105a where matching unit 105 is made into an apparatus is different in apparatus configuration, depending on the matching method. Specifically, this is realized by a computer which has a storage device, such as a memory, a magnetic disc device and the like, and a calculator, such as a CPU operated in accordance with a program and the like.

Fourth Embodiment

The fourth embodiment of the present invention will be described below with reference to the drawings. This embodiment corresponds to an apparatus where the data matching apparatus in the second embodiment is made into a specific apparatus. In this embodiment, the data matching apparatus includes: a state change generator where state change data generating unit 102 is made into an apparatus; a matching data accumulator where matching data accumulating unit 104 is made into an apparatus; and a matching device where matching unit 105 is made into an apparatus.

In this embodiment, the configurations of the matching data accumulator and matching device are similar to the configurations of the matching data accumulator and matching device 105a shown in the third embodiment.

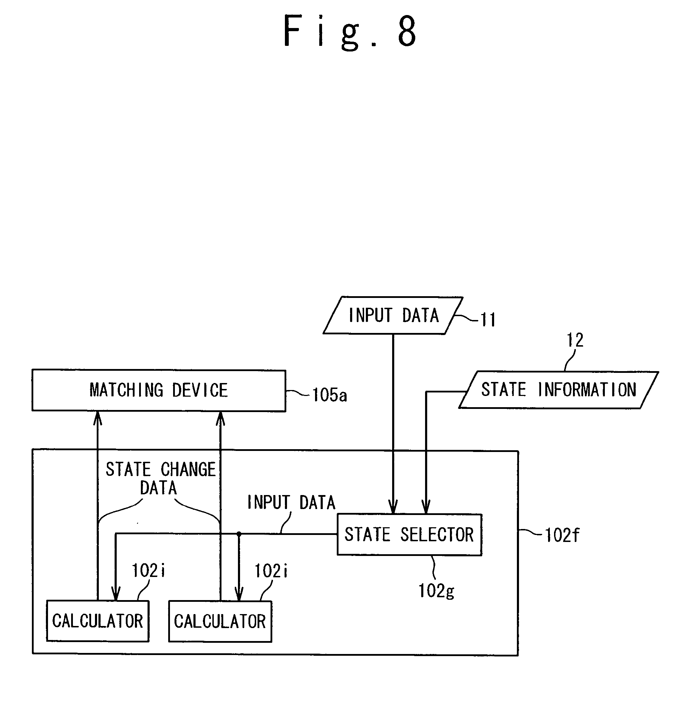

Fig. 8 is a block diagram showing an example of the configuration of a state change data generator 102f where the state change data generating unit 102 is made into an apparatus. As shown in Fig. 8, the state change data generator 102f contains a state selector 102g and calculators 102i.

The state selector 102g is specifically realized by a semiconductor circuit for switching and the like. The state selector 102g, when receiving the input data 11 and the state (ageing) information 12, sends an input image (input data) to calculator 102i, which carries out a neural network calculation for converting input data 11 into a state other than the state indicated in state information 12, among the calculators 102i. The calculator 102i is specifically realized by a CPU operated in accordance with a program. Each of the calculators 102i converts input data 11 into the face image in a state different from the state indicated in the state information 12, and generates the state change data and then outputs it to matching device 105a.

In the first embodiment, the data matching method executed by the data matching apparatus may be realized by a data matching program which can be executed on a calculating apparatus. Then, the data matching program may be stored in an information recording medium, which can be read in the calculating apparatus, and loaded into the calculating apparatus. Consequently, the data matching process indicated in the first embodiment may be executed on the calculating apparatus.

For example, the data matching process may be executed by loading, into the calculating apparatus, the data matching program for instructing a computer to execute: the process for decomposing the data of the matching target into the configuration component in the predetermined state; the process for converting the parameter corresponding to the configuration component in the predetermined state into the parameter in the state different from the predetermined state; the process for accumulating the configuration component of the data classified into each state and using the accumulated configuration component and the converted parameter and then generating the state change data where the predetermined state change is given to the data of the matching target; and the process for matching the generated state change data with the matching data group accumulated by the matching data accumulating unit.

Also, in the second embodiment, the data matching method executed by the data matching apparatus may be realized by a data matching program which can be executed on the calculating apparatus. Then, the data matching program may be stored in the information recording medium which can be read by the calculating apparatus and loaded into the calculating apparatus so that the data matching process indicated in the second embodiment may be executed on the calculating apparatus.

For example, the data matching process may be executed by loading, into the calculating apparatus, the data matching program for instructing the computer to execute: the process for generating the state change data where the data in the predetermined state is changed into the data in the state different from the predetermined state, in accordance with the conversion using the study through the data classified into each state; and the process for matching the generated state change data with the matching data group accumulated by the matching data accumulating unit.

**Claims**

1. A data matching method comprising:

   a configuration component accumulating step accumulating a configuration component generated by decomposing a measuring quantity of an object by a predetermined method and a plurality of states of said object each of which is corresponding to said configuration component;
   a component decomposing step decomposing a measuring quantity of a matching target object into said configuration component at a predetermined state of said plurality of states;
   a parameter conversion step converting a parameter corresponding to said configuration component of said predetermined state into a converted parameter of a second state of said plurality of states different from said predetermined state;
   a state change data generating step generating state change data by adding a predetermined state change to data of said matching target object by using said configuration component accumulated in said configuration component accumulating step and said converted parameter; and
   a matching step matching said state change data and a previously accumulated matching data.

2. The data matching method according to claim 1, wherein said predetermined method is a principal component analysis.

3. A data matching method comprising:

   a configuration component accumulating step accumulating a configuration component generated by decomposing a measuring quantity of an object by a predetermined method and a plurality of states of said object each of which is corresponding to said configuration component;
   a connecting step connecting a parameter corresponding to said configuration component at a first state of said plurality of states and a parameter corresponding to said configuration component at a second state through a conversion using learning;
   a state change data generating step generating state change data of said second state by converting data of said matching target object at said first state through a conversion using said learning; and
   a matching step matching said state change data and matching data accumulated in advance.

4. The data matching method according to any of claims 1 to 3, wherein the data of said matching target is biometrics data.

5. The data matching method according to any of claims 1 to 4, wherein each of said plurality of states corresponds to a state at a different time through he course of aging.

**6.** The data matching method according to any of claims 1 to 5, wherein said measuring quantity is an image of a face.

**7.** A data matching apparatus comprising :

a configuration component accumulating unit configured to accumulate a configuration component generated by decomposing a measuring quantity of an object by a predetermined method and a plurality of states of said object each of which is corresponding to said configuration component;

a component decomposing unit configured to decompose a measuring quantity of a matching target object into said configuration component at a predetermined state of said plurality of states;

a parameter conversion unit configured to convert a parameter corresponding to said configuration component of said predetermined state into a converted parameter of a second state of said plurality of states different from said predetermined state;

a state change data generating unit configured to generate state change data by adding a predetermined state change to data of said matching target object by using said configuration component accumulated in said configuration component accumulating step and said converted parameter; and

a matching unit configured to match said state change data and previously accumulated matching data.

**8.** The data matching apparatus according to claim 7, wherein said predetermined method is a principal component analysis.

**9.** A data matching apparatus comprising:

a configuration component accumulating unit configured to accumulate a configuration component generated by decomposing a measuring quantity of an object by a predetermined method and a plurality of states of said object each of which is corresponding to said configuration component;

a connecting unit configured to connect a parameter corresponding to said configuration component at a first state of said plurality of states and a parameter corresponding to said configuration component at a second state through a conversion using learning;

a state change data generating unit configured to generate state change data of said second state by converting data of said matching target obj ect at said first state through a conversion using said learning; and

a matching unit configured to match said state change data and a matching data accumulated in advance.

**10.** The data matching apparatus according to any of claims 7 to 9, wherein the data of said matching target is biometrics data.

**11.** The data matching apparatus according to any of claims 7 to 10, wherein each of said plurality of states corresponds to a state at a different time through the course of aging.

**12.** The data matching apparatus according to any of claims 7 to 11, wherein said measuring quantity is an image of a face.

**13.** A data matching program for instructing a computer to execute a method comprising:

a configuration component accumulating step accumulating a configuration component generated by decomposing a measuring quantity of an object by a predetermined method and a plurality of states of said object each of which is corresponding to said configuration component;

a component decomposing step decomposing a measuring quantity of a matching target object into said configuration component at a predetermined state of said plurality of states;

a parameter conversion step converting a parameter corresponding to said configuration component of said predetermined state into a converted parameter of a second state of said plurality of states different from said predetermined state;

a state change data generating step generating a state change data by adding a predetermined state change to a data of said matching target object by using said configuration component accumulated in said configuration component accumulating step and said converted parameter; and

a matching step matching said state change data and a previously accumulated matching data.

**14.** A data matching program for instructing a computer to execute a method comprising:

a configuration component accumulating step accumulating a configuration component generated by decomposing a measuring quantity of an object by a predetermined method and a plurality of states of said object each of which is corresponding to said configuration component;

a connecting step connecting a parameter corresponding to said configuration component at a first state of said plurality of states and a parameter corresponding to said configuration component at a second state through a conversion using a learning;

a state change data generating step generating state change data of said second state by converting data of said matching target object at said first state through a conversion using said learning; and

a matching step matching said state change data and matching data accumulated in advance.

# Fig. 1

INPUT DATA ~11

101 ①

COMPONENT ANALYZING UNIT

MATCHING RESULT ~18

CONFIGURATION
COMPONENT

CONFIGURATION COMPONENT
COEFFICIENT
④ (BEFORE CONVERSION)

12 ③

STATE INFORMATION

CONFIGURATION COMPONENT
⑨ 105

STATE CHANGE DATA

102

STATE CHANGE
DATA
GENERATING
UNIT

② ⑦

MATCHING UNIT

REGISTRATION
INFORMATION

⑧ 104

DB1 ··· DBi ··· DBn

MATCHING DATA
ACCUMULATING
UNIT

⑤ ⑥

CONFIGURATION COMPONENT
COEFFICIENT
(BEFORE CONVERSION)

CONFIGURATION
COMPONENT COEFFICIENT
(AFTER CONVERSION)

COMPONENT COEFFICIENT
CONVERTING UNIT ~103

# Fig. 2

START

S101

INPUT THE INPUT DATA FOR MATCHING

S102

INPUT THE STATE OF THE INPUT DATA FOR MATCHING

S103

SELECT THE STATE-SPECIFIC DATABASE CORRESPONDING TO THE STATE OF THE INPUT DATA FOR MATCHING

S104

ANALYZE THE INPUT DATA BY USING THE CONFIGURATION COMPONENT OF SELECTED STATE-SPECIFIC DATABASE AND CALCULATE CONFIGURATION COMPONENT COEFFICIENTS

S105

CONVERT THE CALCULATED CONFIGURATION COMPONENT COEFFICIENTS INTO THE CONFIGURATION COMPONENT COEFFICIENTS CORRESPONDING TO THE OTHER STATE-SPECIFIC DATABASE

S106

GENERATE THE STATE CHANGE DATA BY USING THE CONVERTED CONFIGURATION COMPONENT COEFFICIENTS AND THE CONFIGURATION COMPONENTS OF THE CORRESPONDING STATE-SPECIFIC DATABASE

S107

MATCHING STATE CHANGE DATA AND ACCUMULATED REGISTRATION DATA AND OUTPUT MATCHING RESULT

END

# Fig. 3

INPUT DATA 11

MATCHING RESULT 18

STATE INFORMATION 12

② STATE CHANGE DATA

①

④ STATE CHANGE DATA

④

102

STATE CHANGE DATA GENERATING UNIT

DB1 DBi DBn

③ ③

INPUT DATA

MATCHING UNIT 105

⑥

REGISTRATION INFORMATION 104

⑤

MATCHING DATA ACCUMULATING UNIT

# Fig. 4

```
                    ┌──────────────────┐
                    │      START       │
                    └──────────────────┘
                             │
                             │              ╱S201
    ┌────────────────────────────────────────────────────┐
    │         INPUT THE INPUT DATA FOR MATCHING          │
    └────────────────────────────────────────────────────┘
                             │
                             │              ╱S202
    ┌────────────────────────────────────────────────────┐
    │      INPUT THE STATE OF THE INPUT DATA FOR MATCHING │
    └────────────────────────────────────────────────────┘
                             │
                             │              ╱S203
    ┌────────────────────────────────────────────────────┐
    │  CONVERT THE INPUT DATA INTO THE STATE CHANGE DATA OF│
    │  THE DIFFERENT STATE THROUGH LEARNED NEURAL NETWORK │
    └────────────────────────────────────────────────────┘
                             │
                             │              ╱S204
    ┌────────────────────────────────────────────────────┐
    │       MATCHING STATE CHANGE DATA AND ACCUMULATED    │
    │    REGISTRATION DATA AND OUTPUT MATCHING RESULT     │
    └────────────────────────────────────────────────────┘
                             │
                    ┌──────────────────┐
                    │       END        │
                    └──────────────────┘
```

# Fig. 5

INPUT DATA ~11

INPUT DATA STORAGE
DEVICE (BUFFER)

~101a

~101c

CONFIGURATION
COMPONENT
COEFFICIENT

101b

CALCULATOR

CONFIGURATION COMPONENT
STORAGE DEVICE (BUFFER)

101d~ . . . . . . ~101d

CONFIGURATION
COMPONENT

STATE CHANGE GENERATOR ~102a

Fig. 6

STATE INFORMATION — 12

COMPONENT ANALYZER — 101a

MATCHING DEVICE — 105a

CONFIGURATION COMPONENT COEFFICIENT
(BEFORE CONVERSION)

CONFIGURATION COMPONENT

STATE CHANGE DATA

STATE SELECTOR — 102a

102c    102c

CALCULATOR    CALCULATOR

102e
STATE
INFORMATION
CONFIGURATION
COMPONENT
COEFFICIENT
(BEFORE CONVERSION)

CALCULATOR — 102c

CONFIGURATION COMPONENT

CONFIGURATION COMPONENT COEFFICIENT
(BEFORE CONVERSION)

· · · · · · ·

102d    102d    102d

COMPONENT COEFFICIENT CONVERTER — 103a

EP 1 768 064 A1

# Fig. 7

CONFIGURATION COMPONENT COEFFICIENT
(BEFORE CONVERSION)

$c_1$  $c_2$  $\cdots\cdots$  $c_n$

CALCULATOR

~103a

~103b

$d_1$  $d_2$  $\cdots\cdots$  $d_n$

CONFIGURATION COMPONENT COEFFICIENT
(AFTER CONVERSION)

# Fig. 8

INPUT DATA ~11

MATCHING DEVICE ~105a

STATE INFORMATION 12

STATE CHANGE DATA

INPUT DATA

STATE SELECTOR ~102f

102i

102i

102g

CALCULATOR

CALCULATOR

## INTERNATIONAL SEARCH REPORT

International application No.

PCT/JP2005/012952

| A. CLASSIFICATION OF SUBJECT MATTER |
|---|
| Int.Cl$^7$ G06T7/00 |

According to International Patent Classification (IPC) or to both national classification and IPC

| B. FIELDS SEARCHED |
|---|
| Minimum documentation searched (classification system followed by classification symbols)<br>Int.Cl$^7$ G06T7/00 |

Documentation searched other than minimum documentation to the extent that such documents are included in the fields searched
| | | | |
|---|---|---|---|
| Jitsuyo Shinan Koho | 1922-1996 | Jitsuyo Shinan Toroku Koho | 1996-2005 |
| Kokai Jitsuyo Shinan Koho | 1971-2005 | Toroku Jitsuyo Shinan Koho | 1994-2005 |

Electronic data base consulted during the international search (name of data base and, where practicable, search terms used)

| C. DOCUMENTS CONSIDERED TO BE RELEVANT |
|---|

| Category* | Citation of document, with indication, where appropriate, of the relevant passages | Relevant to claim No. |
|---|---|---|
| A | JP 2000-113197 A (Victor Company Of Japan, Ltd.),<br>21 April, 2000 (21.04.00),<br>Full text; all drawings<br>(Family: none) | 1-14 |
| A | JP 2000-357221 A (Minolta Co., Ltd.),<br>26 December, 2000 (26.12.00),<br>Full text; all drawings<br>(Family: none) | 1-14 |

☐ Further documents are listed in the continuation of Box C.    ☐ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search<br>09 August, 2005 (09.08.05) | Date of mailing of the international search report<br>23 August, 2005 (23.08.05) |
|---|---|
| Name and mailing address of the ISA/<br>   Japanese Patent Office | Authorized officer |
| Facsimile No. | Telephone No. |

Form PCT/ISA/210 (second sheet) (January 2004)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6556196 B
- JP 2000132675 A
- JP 2003233671 A